# EUROPEAN PATENT SPECIFICATION

(11) **EP 3 822 522 B1**
(45) Date of publication and mention of the grant of the patent: **04.09.2024**
(21) Application number: 19208424.2
(22) Date of filing: 12.11.2019
(51) Int. Cl.: F16K 1/32, F16K 41/08, F16J 15/3236

(54) **A TRAILER CONTROL VALVE FOR A VEHICLE**
EIN ANHÄNGER-STEUERVENTIL FÜR EIN FAHRZEUG
SOUPAPE DE COMMANDE DE REMORQUE POUR UN VÉHICULE

(43) Date of publication of application: 19.05.2021
(73) Proprietor: ZF CV Systems Europe BV, 1170 Brussels (BE)
(72) Inventor: COUPPEE, Ulrich, 31863 Coppenbrügge (DE); FESZCZUK, Witold, 55-065 Jordanow Sl. (PL); KACKI, Damian, 53238 Wroclaw (PL); REMSKI, Artur, 53-322 Wroclaw (PL); SMARDZ, Marek, 67-400 Wschowa (PL)
(74) Representative: Rabe, Dirk-Heinrich

(56) References cited:
- EP-A1- 2 353 954
- EP-A1- 2 754 929
- EP-A1- 3 431 782
- EP-A1- 3 505 799
- EP-A2- 2 960 082
- CN-A- 103 303 296
- DE-U1- 29 616 242
- US-A- 4 898 081
- US-A- 5 083 495
- US-A- 5 673 919
- US-A1- 2007 013 229

## Description

The invention relates to a trailer control valve comprising a lip seal for sealing a first element against a second element moving relative to the first element, the lip seal comprising a ring shaped lip seal body, with a sealing portion for contacting said second element, and a fixing portion for fixing the lip seal to said first element.

To ensure correct functionality and/or efficiency of technical assemblies it is often needed to seal a first element against a second element. Sealing of first and seconds elements against each other is especially challenging if said elements move relative to each other. For example, this can be the case if a piston rod or shaft performs a motion relative to its longitudinal axis in a cylinder or casing element. A first possibility for preventing leakages is to provide a flexible bellows type seal fixed to both of the elements moving relative to each other. However, such an assembly limits the range of motion of the elements and requires a sealing chamber for arranging the bellows seal. Therefore, it is often more practical to use sealing elements which are fixed to a corresponding first element and allow for relative movement of the second element. Such sealing elements are often formed as lip seals having a sealing lip contacting the relatively moving element.

DE 26 16 796 A1 discloses a sealing element for a piston rod, in particular for a pneumatic cylinder protruding through a bore, having a radially outer fixing element and two sealing legs or lips protruding radially inward for contacting the piston rod. The fixing element is generally ring shaped and attached to casing element of the cylinder via a metal ring reinforcement. To ensure a press fit of the metal ring reinforcement within the bore, high precision is required while manufacturing said elements. Furthermore, the multi-part design increases the assembly cost.

US 2007 013 229 A1 discloses a sealing arrangement around a connection shaft that is used in a spring type brake actuator. The sealing arrangement includes sealing rings having a recess formed in an outer peripheral surface and a plurality of fingers for engaging with projecting lugs of a corresponding element. To allow for deformation of the fingers upon installation, the fingers are spaced apart by V-shaped spaces. To prevent rotation of the lip seal, a raised portion is formed on the lip seal body which mates with a corresponding notch in a fixed portion of the assembly. The fingers as well as the raised portion provide for a complex design of the lip seal body increasing the overall manufacturing cost per unit.

US 2017 0051803 A1 relates to a brake actuator having a sealing structure. The sealing structure includes a seal body fixed to a protrusion formed at an outer surface of a casing bolt head having an air flow hole. A flexible seal portion extends down from the seal body and functions to seal an outer end of the air flow hole such that airflow through the air flow hole is only allowed in one direction. EP 2 353 954 A1 discloses a pneumatic spring brake cylinder with a sealing arrangement comprising a sealing element having two legs or lips for sealingly engaging the spring brake cylinder as well as a piston rod. The sealing element is attached to a protrusion formed on the piston rod via a rigid guide ring. Since, the sealing arrangement is formed from a sealing element as well as a guide ring, assembly and/or manufacturing costs are higher than for a one-piece sealing construction. By attaching the seal to the piston rod, the sealing surface is and therefore the risk of leakages is increased.

CN 103303296 B discloses a trailer control valve comprising a seal, a first element, a second element formed as a piston, a valve inlet, a valve outlet, and a valve seat, wherein, in a closed position, said piston engages said valve seat and closes said trailer control valve, wherein, in an open position, said piston is spaced from said valve seat such that pressurized air can flow from said valve inlet to said valve outlet.

Generally manufacturing cost as well as good sealing capabilities are of utmost importance for lip seals, especially when used in automotive applications such as trailer control valves or air brakes for commercial vehicles. Lip seals affect corresponding elements like rods, pistons, casing elements and so forth. To reduce the overall cost of a product the corresponding elements are often formed from plastics. However, state of the art lip seals often require inner sealing grooves in the corresponding elements which may cause quality issues and increased cost. Since great numbers of lip seals are needed, it is a requirement that the overall costs per unit are low and that assembly costs are reduced while sealing of the elements against each other is ensured.

Thus, it is an object of the invention to provide a trailer control valve that allows for reduced manufacturing cost, a simplified design of the corresponding first element and/or reduced assembly costs.

To solve this object, the present invention proposes a trailer control valve according to claim 1, wherein the fixing portion has an assembly groove formed in an outer peripheral surface for engaging with a corresponding protrusion formed on said first element and a transition portion to the sealing portion. Furthermore, the invention proposes that the lip seal body is rotationally symmetrical to a central axis of the lip seal body and that the sealing portion comprises an inner leg protruding towards the central axis and an outer leg protruding away from the central axis, wherein the outer leg is adapted to sealingly contact the first element and the inner leg is adapted to sealingly contact the second element.

The central axis extends centrally through the lip seal body from a first axial end of the lip seal body to a second axial and of the lip seal body. Since the lip seal body is rotationally symmetrical, the central axis is a straight. The lip seal body comprises an inner peripheral surface closer to the central axis than the outer peripheral surface of the lip seal body.

The assembly grove provided on the fixing portion allows for engagement with a corresponding protrusion on a first element, such as a cylinder or casing element. It is generally easier and therefore more cost efficient to manufacture groves in outer peripheral surfaces than in inner peripheral surfaces. Since the corresponding part of the first element is formed as a protrusion, no recesses and/or sealing grooves in an inner peripheral surface of the first element are needed. Therefore, overall manufacturing costs for the assembly including the lip seal as well as the first element can be reduced. Furthermore, by forming the lip seal body rotationally symmetrical the manufacturing cost for the lip seal itself can be reduced, especially when moulding and/or turning processes are involved.

According to the invention, the first element is a piston rod and the first and / or second element may be moving elements. It is preferred that the lip seal body is formed from a flexible material such that it may be deformed upon installation with the first element. Preferably, the flexible material is an elastomeric material. It is particularly preferred that the lip seal body is formed from an elastomer and/or that the material forming the lip seal body has self-lubricating properties. However, it is also preferred that the fixing portion is formed from a rigid material and that the corresponding protrusion formed on said first element is flexible upon installation of the lips seal. By providing a rotationally symmetrical lip seal body, a risk of misalignments during assembly of the lip seal with the first element can be reduced.

Preferably, the transition portion of the fixing portion is arranged in between the inner groove and the sealing portion in an axial direction defined by the central axis. Since sealing of the first element against the second element is provided by the sealing portion, it is possible to manufacture the fixing portion and/or the corresponding element with lower surface qualities as well as lower manufacturing tolerances. However, it shall be understood that additional sealing contact between the fixing portion and the first element is preferred.

The lip seal body comprises two legs sealingly engaging the first and second element. The inner leg protrudes towards the central axis. Preferably, the minimum inner diameter of the sealing portion is an overall minimum inner diameter of the lip seal body. However, the overall minimum inner diameter of the lip seal body may also be formed at the fixing portion, for example when the corresponding second element is a shaft with varying diameters. Preferably, the inner leg is angled towards the central axis such that it protrudes towards the central axis of the lip seal body in a radial direction as well as preferably an axial direction. The inner leg may also protrude in a radial direction only.

The outer leg of the sealing portion sealingly contacts the first element and protrudes away from the central axis preferably at an angle. The outer leg may also protrude radially outwardly only. It is preferred that the inner leg and the outer leg are angled to the central axis and towards the same axial end of the lip seal body. The inner leg comprises an inner leg longitudinal axis which defines an inner leg angle together with the central axis. The outer leg comprises an outer leg longitudinal axis which definers an outer leg angle together with the central axis. The inner leg may also protrude radially towards the central axis and to a first axial end of the lip seal body while the outer leg protrudes radially outward and to a second axial end of the lip seal body opposite of the first axial end. The outer leg defines a maximum outer diameter of the sealing portion, preferably of the entire lip seal body. If the lip seal is installed in a stepped bore, wherein the diameter of the bore at the sealing portion is smaller than the diameter of the bore at the fixing portion, the maximum diameter of the lip seal body may also be located on the fixing portion.

In a first preferred embodiment the outer leg is adapted to be deformed towards the central axis upon assembly of the lip seal with the first element. Preferably, a corresponding minimum inner diameter of the first element is smaller than the maximum outer diameter defined by the outer leg such that the outer leg is deformed towards the central axis upon installation in the first element. Preferably, the outer leg is deformed along its entire circumference. It is further preferred that the outer leg is formed from a flexible material. The outer leg may also be deformed plastically upon installation. By deforming the outer leg upon installation sealing properties can be achieved while allowing reduced manufacturing tolerances for the corresponding first element. Preferably, the outer leg provides a resistance against its deformation such that it presses against the first element.

In a further preferred embodiment the inner leg is adapted to be deformed away from the central axis upon assembly of the lip seal with the second element. Preferably, an inner diameter defined by the inner leg is smaller than a corresponding outer diameter of the second element such that the inner leg is deformed upon installation of the second element. Preferably, the inner leg is deformed along its entire circumference. It is further preferred that the inner leg is formed from an elastic material. By deforming the inner leg, the minimum inner diameter is increased. Preferably, the inner leg provides a resistance against its deformation such that the inner leg presses against the second element.

According to another preferred embodiment the outer leg protrudes away from the central axis at an outer leg angle having a range relative to the central axis of 90° to 10°, preferably 80° to 15°, preferably 70° to 15°, preferably 60° to 20°, preferably 50° to 20°, particularly preferred 40° to 20°. The outer leg angle is defined as the smaller angle measured between the outer leg and the central axis of the lip seal body.

It is further preferred that the inner leg protrudes towards the central axis at an inner leg angle having a range relative to the central axis of 90° to 10°, preferably 80° to 15°, preferably 70° to 15°, preferably 60° to 20°, preferably 50° to 20°, particularly preferred 40° to 20°. The inner leg angle is defined as the smaller angle of the two angles measured between the inner leg and the central axis. If the outer leg and the inner leg protrude towards the same axial end of the lip seal body the inner leg angle and the outer leg angle are measured in opposing senses.

Preferably, the inner leg comprises a circumferential inner edge adapted to form a sealing line contact with the second element. It is further preferred that the outer leg comprises a circumferential outer edge adapted to form a sealing line contact with the first element. The line contact between the first element and the lip seal and/or the second element and the lip seal allows small deformations of the circumferential inner edge and/or circumferential outer edge upon installation of the lip seal. Such small deformations compensate unevenness on a corresponding surface of the first and/or second element. Furthermore, if the second element moves relative to the lip seal, the line contact minimizes a contact surface and thus minimizes friction and/or wear in between the relatively moving parts.

In a further preferred embodiment of the invention an axial length of the inner leg, measured along the central axis, is shorter than a corresponding axial length of the outer leg. Preferably, the axial length is measured from a leg transition between the first leg and the second leg. It is further preferred that the axial length of the inner leg is substantially equal to the axial length of the outer leg. The length of the inner leg and/or the outer length influences a flexibility of the respective leg.

According to a preferred embodiment an inner leg width of the inner leg equals an outer leg width of the outer leg. The inner leg width of the inner leg is measured perpendicular to the inner leg longitudinal axis. The outer leg width is measured perpendicular to the outer leg longitudinal axis. The inner and outer leg width determines a degree of resistance of the inner and outer leg against deformation. If the inner leg and/or outer leg width is increased, the resistance of the inner leg and/or outer leg against deformation is increased respectively.

In a preferred embodiment the assembly groove is U-shaped. A first sidewall of the assembly groove is parallel to a second sidewall of the assembly groove opposite the first side wall. Preferably, a groove bottom of the assembly groove opposite to an opening side of the groove is perpendicular to the first and second sidewall. However, it shall be understood that the groove bottom may also be angled with respect to the first and second sidewall. A first groove transition between the first side wall and the groove bottom is preferably rounded. The first groove transition may also be formed as a sharp corner. It is further preferred that a second transition between the second side wall and the groove bottom is rounded. The second groove transition may also be a sharp corner. Preferably, the assembly groove is V-shaped, T-shaped and/or W-shaped.

According to a preferred embodiment, the first sidewall and the second sidewall are perpendicular to the central axis. When the first and second sidewalls are perpendicular to the central axis undercuts in the assembly groove can be avoided. Manufacturing of the assembly groove and/or the lip seal is facilitated and manufacturing costs can be reduced. It is further preferred that only the first sidewall or the second sidewall is perpendicular to the central axis. For example, the second sidewall can be angled such that an assembly groove width increases from the groove bottom towards the opening side of the groove. This allows for facilitated engagement of the lip seal with the corresponding protrusion formed on the first element. The assembly groove width is measured from the first sidewall to the second sidewall parallel to the central axis. When the first sidewall and the second sidewall are parallel, the assembly groove width is constant.

Preferably, the fixing portion has an axial end face perpendicular to the central axis. Manufacturing of faces perpendicular to the central axis is generally possible at low costs and high manufacturing tolerances. Furthermore, an axial end face perpendicular to the central axis may serve as an end stop upon installation and/or during operation of the lip seal.

It is particularly preferred that an assembly groove width of the assembly groove equals an axial end thickness measured between the axial end face and the first sidewall. The axial end thickness determines a degree of resistance of an axial end portion of the fixing portion against deformation. When the axial end thickness equals the assembly groove width sufficient resistance of the axial end portion against deformation can be ensured.

It is further preferred that the assembly groove width equals an axial length of the transition portion. The axial length of the transition portion is measured between the second sidewall and the leg transition parallel to the central axis. If the axial length of the transition portion relative to the assembly groove width is too small, mechanical forces applied to the lip seal during operation may cause mechanical failure of the transition portion. The inventors have found that by forming the lip seal body such that the assembly groove width equals the axial length of the transition portion, functionality of the lip seal is ensured. It shall be understood that the axial length of the transition portion may also be larger than the assembly groove width. It is particularly preferred that the axial length of the transition portion equals the axial end thickness.

In a preferred embodiment the assembly groove has a depth measured in a radial direction in a range of 10% to 80%, preferably 20% to 70%, preferably 30% to 60%, in particular 40% to 60%, of the radial thickness of the fixing portion. The assembly groove depth is measured from the groove bottom perpendicular to the central axis in a radial direction. The assembly groove depth may vary if the groove bottom is not parallel to the central axis or if a first outer diameter of the outer peripheral surface at a transition to the first side wall differs from a second outer diameter of the outer peripheral surface at a transition to the second side wall. If the groove depth varies along the central axis, the assembly groove depth is an average assembly groove depth. If the radial thickness of the fixing portion is variable, a minimum radial thickness of the fixing portion defines the radial thickness. As the area of the first and second inner wall increases with the depth of the assembly groove, a deeper assembly groove generally results in better fixation of the lip seal to the first element. However, if the depth of the assembly groove is too large, forces applied to the lip seal parallel to the central axis may deform the fixing portion such that the lip seal is damaged and/or released from the first element. By defining a depth of the assembly groove in the desired range functionality of the lip seal is ensured.

Preferably, the outer peripheral surface of the fixing portion is parallel to the central axis. It is further preferred that the inner peripheral surface of the fixing portion is parallel to the central axis. When the inner peripheral and the outer peripheral surface of the fixing portion are parallel the radial thickness of the fixing portion is constant. Surfaces of the fixing portion which are perpendicular to the central axis are generally easy to manufacture and therefore result in low manufacturing and/or tooling cost.

According to a preferred embodiment, the lip seal is a one-piece construction. A one-piece construction allows for low manufacturing and prevents leakages. Furthermore, assembly of the lip seal with the first element and/or the second element is facilitated. However, it shall be understood that the lip seal may comprise multiple materials. For example, the lip seal may be manufactured from multiple materials in a multi-step injection moulding process or by adhering the fixing portion to the sealing portion.

In a further preferred embodiment the inner leg end face is angled towards the central axis at an angle having a range of larger than 90° to smaller than 180°, preferably 100° to 170°, preferably 100° to 160°, preferably 100° to 150°, preferably 100° to 140°, preferably 110° to 130°, particularly preferred 120°. The angle of the inner leg end face is measured in the same sense as the inner leg angle. The inner leg end face is opposite to the transition portion of the fixing portion and perpendicular to the inner leg longitudinal axis. When the circumferential inner edge is worn during operation the inner leg contacts the second element in a planar contact. The angle of the inner leg end face determines the surface area contacting the second element and thereby influences long term sealing and/or friction characteristics. If the angle of the inner leg end face is increased the contact area is increased in a worn condition. It is further preferred that the outer leg end face is angled away from the central axis at an angle having a range of larger than 90° to less than 180°, preferably 100° to 150°, preferably 110° to 130°, particularly preferred 120°. The angle of the outer leg end face is measured in the same sense as the outer leg angle. The outer leg end face is opposite to the transition portion of the fixing portion and perpendicular to the outer leg longitudinal axis. When the circumferential outer edge suffers from wear during operation the outer leg contacts the first element in a planar contact. The angle of the outer leg end face determines the surface area contacting the first element and thereby influences long term sealing and/or friction characteristics. If the angle of the outer leg end face is increased the contact area in a worn condition is increased.

For a more complete understanding of the invention, the invention will now be described in detail with reference to the accompanying drawings. The detailed description will illustrate and describe what is considered as preferred embodiments of the invention. It should of course be understood that various modifications and changes in form or detail could readily be made without departing from the scope of the invention as defined by the claims.

It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth. In the accompanying drawings:
- Fig. 1: shows a simplified cut view of a lip seal according to a first embodiment of the invention;
- Fig. 2: shows the lip seal according to the first embodiment of the invention engaging a first element;
- Fig. 3: shows the lip seal according to the first embodiment of the invention engaging a first element and a second element;
- Fig. 4: shows a simplified cut view of a lip seal according to a second embodiment of the invention (only one half of the cross-section shown);
- Fig.5: shows a simplified cut view of a lip seal according to a third embodiment of the invention (only one half of the cross-section shown);
- Fig. 6: shows a simplified cut view of a lip seal according to a fourth embodiment of the invention (only one half of the cross-section shown);
- Fig. 7: shows a schematic view of a valve having a lip seal according to the first embodiment, and
- Fig. 8: shows a schematic view of a vehicle.

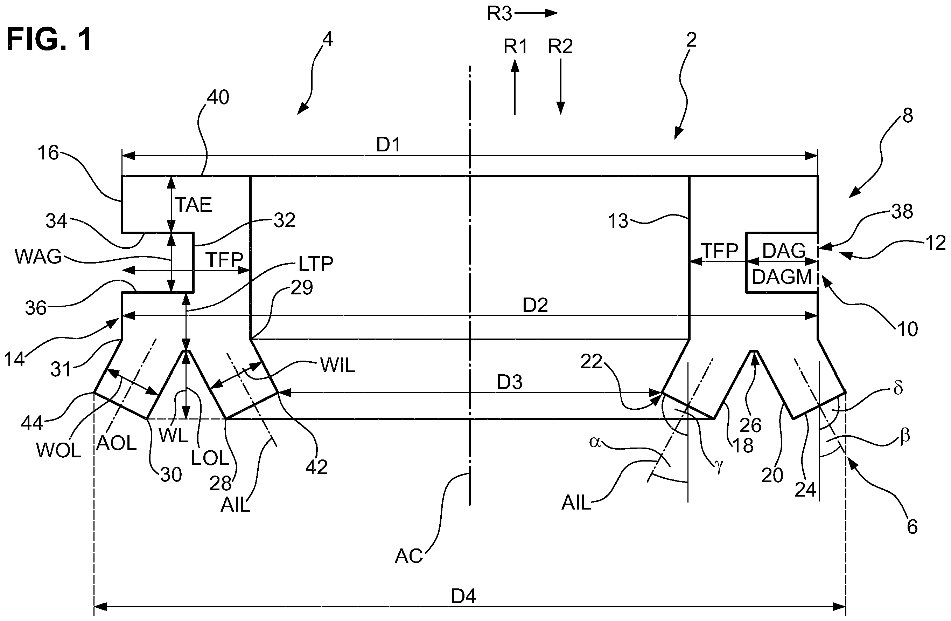

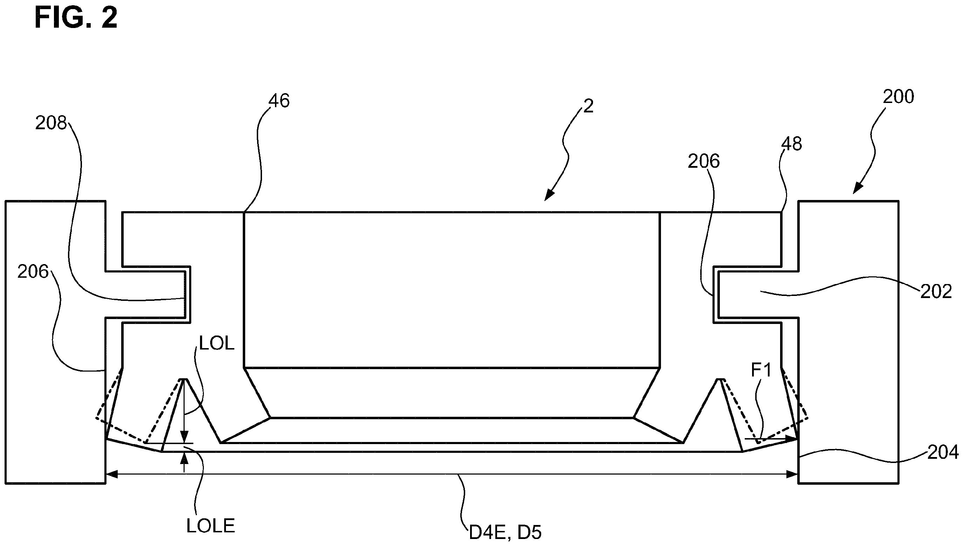

A trailer control valve according to a first embodiment of the invention comprises a lip seal 2 having a ring shaped lip seal body 4 which is rotationally symmetrical to a central axis AC of the lip seal body 4. A sealing portion 6 and a fixing portion 8 of the lip seal body 4 are arranged along the central axis AC. Here, an outer peripheral surface 12 and an inner peripheral surface 13 of the fixing portion 8 are parallel to the central axis AC. For fixing the lip seal 2 to a first element 200 (not shown in Fig. 1, see Fig. 2) an assembly groove 10 is formed on the outer peripheral surface 12 of the fixing portion 8. The fixing portion 8 further comprises an axial end portion 16 and a transition portion 14 to the sealing portion 6. Here, the sealing portion 6 comprises an inner leg 18 as well as an outer leg 20. However, the sealing portion 6 may also comprise multiple inner legs 18 and/or multiple outer legs 20.

The inner leg 18 protrudes from the transition portion 14 towards the central axis AC at an inner leg angle α measured between an inner leg longitudinal axis AIL and an axis parallel to the central axis AC. According to this embodiment the inner leg angle α is measured clockwise and has a value of approximately 30°. The outer leg 20 protrudes from the transition portion 14 away from the central axis AC. An outer leg angle β is defined between an outer leg longitudinal axis AOL and an axis parallel to the central axis AC. Here the outer leg angle β is measured counter clockwise. Preferably, the inner leg angle α and the outer leg angle β have equal absolute values as it is the case in this embodiment. However, it is also preferred that the inner leg angle α and the outer leg angle β have different values. For example, it is preferred that the inner leg 18 protrudes perpendicular to the central axis AC at an inner leg angle α of 90° while the outer leg angle β of the outer leg 20 has a value of 30° or vice versa.

Opposite the transition portion 14 the inner leg 18 comprises an inner leg end face 22 that is angled relative to the central axis AC. An inner leg end face angle γ is measured between the inner leg end face 22 and an axis parallel to the central axis AC in an analogous manner to the inner leg angle α. As in this embodiment the inner leg end face 22 is preferably perpendicular to the inner leg longitudinal axis AIL. Therefore, the inner leg end face 22 has an inner leg end face angle γ of 120° and is angled towards the central axis AC. It is also preferred that the inner leg end face 22 is perpendicular to the central axis AC or that the inner leg end face 22 is angled away from the central axis AC at an inner leg end face angle γ of less than 90°. The outer leg 20 comprises an outer leg end face 24 opposite the transition portion 14. The outer leg end face 24 is angled relative to the central axis AC at an outer leg end face angle δ of 120°. The outer leg end face angle δ is measured counter clockwise between the outer leg end face 24 and an axis parallel to the central axis AC such that the outer leg end face 24 is angled away from the central axis AC. However, it shall be understood that the outer leg end face angle δ may also have values equal or smaller than 90° such that the outer leg end face 24 is perpendicular to the central axis AC or angled towards the central axis AC. Preferably, the inner leg end face 22 and the outer leg end face 24 are angled in opposite directions. It is also preferred that the outer leg end face 24 and the inner leg end face are angled in the same direction. In a further preferred embodiment the inner leg end face 22 and the outer leg end face 24 are angled towards each other. Preferably, the outer leg end face angle δ and the inner leg end face angle γ are equal.

An inner leg width WIL of the inner leg 18 is measured perpendicular to the inner leg longitudinal axis AIL. According to this embodiment the inner leg width WIL is along the inner leg longitudinal axis AIL. Such an embodiment provides a simple design that is easy to manufacture. The inner leg 18 may also have a varying inner leg width WIL. It is particularly preferred that the inner leg width WIL increases along the inner leg longitudinal axis AIL towards the inner leg end face 22. In this case a portion of the inner leg 18 adjacent to the transition portion 14 is more flexible than a portion of the inner leg 18 adjacent to the inner leg end face 22. This allows a flexibility of the inner leg to be adjusted without reducing the leg width WIL at the inner leg end face 22. It is also preferred that the inner leg width WIL decreases along the inner leg longitudinal axis AIL towards the inner leg end face 22. In an analogous manner the outer leg width WOL of the outer leg 20 is measured perpendicular to the outer leg longitudinal axis AOL. Here the outer leg width WOL is constant. The outer leg width WOL may also vary along the outer leg longitudinal axis AOL. Preferably, the outer leg width WOL equals the inner leg width WIL. It is also preferred that the inner leg width WIL is larger than or smaller than the outer leg width WOL.

The sealing portion 6 further comprises a leg transition 26 connecting the inner leg 18 to the outer leg 20. An axial length LIL of the inner leg 18 is measured between the leg transition 26 and an inner leg axial end 28 of the inner leg axial end face 22. The inner leg axial end 28 is the point or line on the inner leg end face 22 that has the largest distance from the transition portion 14. An axial length LOL of the outer leg 20 is measured between the leg transition 26 and an outer leg axial end 30 of the outer leg axial end face 24. In an analogous manner the axial end 30 of the outer leg 20 is the point or line on the outer leg end face 24 that is furthest from the transition portion 14. Preferably, the axial length LOL of the outer leg 20 equals the axial length LIL of the inner leg 18. It is further preferred that the axial length LOL of the outer leg 20 is smaller or larger than the axial length LIL of the inner leg 18. Different axial length of the inner leg 18 and the outer leg 20 may be advantageous upon installation of the lip seal. For example, an inner leg 18 having a greater axial length LIL may be brought into contact with a corresponding second element 300 before the outer leg 20 is brought into contact with the first element 200. The flexibility of the inner leg 18 around the inner leg longitudinal axis AIL increases with the respective axial length LIL. In an analogous manner the flexibility of the outer leg 20 around the outer leg longitudinal axis AOL increases with the respective axial length LOL.

Preferably, a sharp inner bend 29 is arranged between the inner leg 18 and the transition portion 14. It is further preferred that a sharp outer bend 31 is arranged between the outer leg 20 and the transition portion 14. However, it shall be understood that there may also be a smooth transition between the inner leg 18 and the transition portion 14 and/or the outer leg 20 and the transition portion.

In this embodiment the assembly groove 10 is generally U-shaped. The groove bottom 32 is parallel to the central axis AC. The first sidewall 34 and the second sidewall 36 of the assembly groove 10 are parallel to each other and perpendicular to the central axis AC. However, it is also preferred that the first sidewall 34 and/or the second sidewall 36 are angled to the central axis AC at an angle having a value different than 90°. This may be particularly advantageous if forces applied to the lip seal 2 in a first direction R1 along the central axis AC are larger than forces applied to the lip seal 2 in a second direction R2 opposite the first direction R1. It is further preferred that the first sidewall 34 and the second sidewall 36 of the assembly groove 10 are not parallel. For example, the first sidewall 34 can be angled towards the central axis AC to facilitate engagement of the assembly groove 10 with a protrusion 202 formed on the first element 200 while the second sidewall 36 is perpendicular to the central axis AC for optimizing a resistance of the lip seal 2 against forces applied in the first direction R1.

Since the first sidewall 34 and the second sidewall 36 of the assembly groove 10 are parallel to each other an assembly groove width WAG is constant. However, it is also preferred that the assembly groove WAG width varies in a radial direction R3. A depth DAG of the assembly groove 10 is measured in the radial direction R3 from the groove bottom 32 to an opening side 38 of the assembly groove 10. In this embodiment the depth DAG of the assembly groove is constant along the central axis AC. It is also preferred that the groove bottom 32 is concave such that the depth DAG varies along the central axis. The depth DAG may also vary if a first outer diameter D1 of the outer peripheral surface 12 on the axial end portion 16 is larger than a corresponding second outer diameter D2 of the peripheral surface 12 on the transition portion 14. Since the groove bottom 32 is parallel to the central axis AC and the first outer diameter D1 and the second outer diameter D2 are equal to each other, the depth DAG of the assembly groove 10 is constant along the central axis AC and equals a maximum depth DAGM of the assembly groove 10. In this embodiment the maximum depth DAGM of the assembly groove 10 has a value of 50% of a radial thickness TFP of the fixing portion 8, measured at an axial position of the maximum depth of DAGM of the assembly groove 10. The maximum depth DAGM influences a mechanical stability of the fixing portion. When the maximum depth DAGM with respect to the radial thickness TFP of the fixing portion 8 is increased, the fixing portion 8 becomes more flexible.

The axial end portion 16 of the fixing portion 8 comprises an axial end face 40 that is an end of the lip seal body 4 opposite to the inner leg axial end 28 and the outer leg axial end 30. Preferably, the axial end face 40 is perpendicular to the central axis AC. The axial end face 40 perpendicular to the central axis AC may serve as an end stop upon installation of the lip seal 2 with the first element 200. Furthermore, an axial force can be applied to the axial end face 40 according to this embodiment without applying a radial force to the lip seal body 4. Thus the lip seal body 4 may be clamped against the corresponding protrusion 202 of the first element 202. It is particularly preferred that the first sidewall 34 and the axial end face 40 are parallel. An axial end thickness TAE of the axial end portion 16 is measured between the first sidewall 34 and the axial end face 40 of the fixing portion 8. Preferably, the axial end thickness TAE equals the assembly groove width WAG. It shall be understood that the assembly groove width WAG may also be smaller or larger than the axial end thickness TAE. If the axial end thickness TAE is decreased a flexibility of the axial end portion 16 along the central axis AC is increased. Thus the axial end portion 16 can be deformed in an axial direction R1, R2 more easily.

An axial length LTP of the transition portion 14 is defined between the second sidewall and the leg transition 26. Preferably, the axial length LTP of the transition portion 14 equals the assembly groove width WAG and/or the axial end thickness TAE. It is further preferred that the axial length LTP equals the axial length LIL of the inner leg 18 and/or the axial length LOL of the outer leg 20. According to a particularly preferred embodiment the axial end thickness TAE, the assembly groove width WAG the axial length LTP of the transition portion 14, the axial length LIL of the inner leg 18 and the axial length LOL of the outer leg 20 are equal. Equal length and thickness values provide a simple design and facilitate manufacturing processes.

As can be seen in Fig. 1 the inner leg 18, in particular a circumferential inner edge 42 of the inner leg 18, defines a minimum inner diameter D3 of the sealing portion 6 of the lip seal 2. Furthermore, the outer leg 20, in particular a circumferential outer edge 44 of the outer leg 20, defines a maximum outer diameter D4 of the sealing portion 6. Upon installation with the first element 200 (Fig. 2), the outer leg 20 is deformed from a free position (shown in dashed lines) to an engaged position (shown in solid lines). In the engaged position the maximum outer diameter D4E of the sealing portion 6 equals an inner diameter D5 of the first element 200 at a corresponding surface 204 to the sealing portion 6. The maximum outer diameter D4E in the engaged position is smaller than the maximum outer diameter D4 in the free positon. Preferably, the outer leg 20 provides a resistance against its deformation such that an outer radial force F1 is applied by the outer leg 20 against the corresponding surface 204. The radial force ensures a sealing contact between the outer circumferential edge 44 and the corresponding surface 204. The corresponding surface 204 is cylindrical and therefore easily accessible. This allows for reduced manufacturing costs of the first element 200. As the maximum outer diameter D4 of the sealing portion 6 decreases to the maximum outer diameter in an engaged position D4E, the axial length LOL of the outer leg 20 increases to an axial length in an engaged position LOLE of the outer leg 20. The outer radial force F1 is defined by the material, the axial length LOL, the outer leg width WOL and/or the outer leg angle β of the outer leg 20.

As shown in Fig. 2, the assembly groove 10 engages a protrusion 202 of the first element 200 and therefore inhibits axial movement of the lip seal 2 relative to the first element 200. Even if a gap is shown between the first sidewall 34 and the protrusion 202 and the second sidewall 36 and the protrusion 202 respectively it shall be understood that the first sidewall 34 and/or second sidewall 36 may contact corresponding faces of the protrusion 202. As indicated in Fig. 2 a radial gap 206 can be formed between the groove bottom 32 and an inner peripheral surface 208 of the protrusion 202. As sealing is ensured between the outer leg 20 and the corresponding surface 204 no sealing contact of the assembly groove 10 and the protrusion 202 of the first element 200 is needed and manufacturing tolerances of the assembly groove 10 and or the protrusion 202 can be reduced. However, it may still be preferred that the assembly groove 10 contacts the protrusion 202. Furthermore, projections 202 on inner peripheral surfaces 206 of first elements 200 can generally be manufactured at lower cost and/or higher accuracy than undercuts.

Since the axial end face 40 of the fixing portion 8 is perpendicular, it is possible to clamp the lip seal 2 against the protrusion 202 of the first element 202 without generating radial forces. However, it shall be understood that fixation of the lip seal 2 at the first element 200 may be provided by the assembly groove 10 engaging the protrusion 202 alone. It is further preferred that the axial end face 40 is angled. The axial end face 40 may be angled towards or away from the central axis AC.

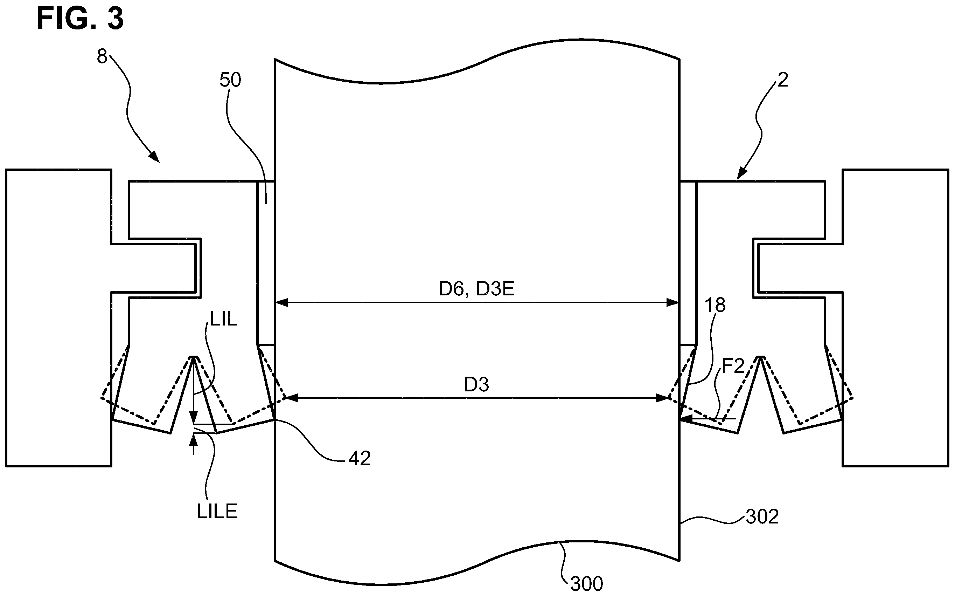

In this embodiment the inner leg 18 of the lip seal is deformed towards the central axis CA when the lip seal 2 is assembled with the second element 300 (Fig. 3). Since an outer diameter D6 of the second element 300 is larger than the minimum inner diameter D3 of the sealing portion 6 in a free position, the inner leg 18 is deformed from a free position (shown in dashed lines) to an engaged position (shown in solid lines). The minimum inner diameter D3 of the sealing portion 6 is enlarged to a minimum inner diameter D3E of the sealing portion 6 in an engaged position. Preferably, the inner leg 18 provides a resistance against its deformation such that an inner radial force F2 is applied by the inner leg 18 against an outer peripheral surface 302 of the second element 300. Preferably, the inner leg 18 and/or the sealing portion 6 and or the entire lip seal 2 is formed from a flexible material, preferably an elastomer, such that it is reversibly deformed upon assembly with the second element 300. The inner leg 18 may also be plastically deformed upon assembly. As the minimum inner diameter D3 increases to a minimum inner diameter D3E in an engaged position, the axial length LIL of the inner leg 18 is increased to an axial length LILE of the inner leg 18 in an engaged position. The inner radial force F2 is defined by the material, the axial length LIL, the inner leg width WIL and/or the inner leg angle α of the inner leg 18. Since the inner leg 18 contacts the outer peripheral surface 302 of the second element 300 a sealing function of the lip seal 2 is ensured. In this embodiment the inner leg 18 contacts the outer peripheral surface 302 of the second element 300 with its circumferential inner edge 42 in a line contact. A circumferential gap 50 is formed between the fixing portion 8 and the second element 300. Thereby friction between the lip seal 2 and the second element 300 is minimized when the first element 200 moves relative to the second element 300. However, it shall be understood that an areal contact between the inner leg 18 and the second element 300 is also preferred.

It shall be understood that the inner leg 18 and/or the outer leg 20 may also be deformed such that the inner leg longitudinal axis AIL and/or the outer leg longitudinal axis AOL are bent upon assembly of the lip seal 2 with the first element 200 and/or the second element 300. Preferably, the inner leg longitudinal axis AIL and/or the outer leg longitudinal axis AOL are straight prior to the assembly. It may also be preferred that the inner leg longitudinal axis AIL and/or the outer leg longitudinal axis AOL are curved prior to assembly. For curved inner leg longitudinal axis AIL and/or the outer leg longitudinal axis AOL the inner leg angle α and/or the outer leg angle β are measured at a tangent to the inner leg longitudinal axis AIL and/or the outer leg longitudinal axis AOL at an axial position of the leg transition 26.

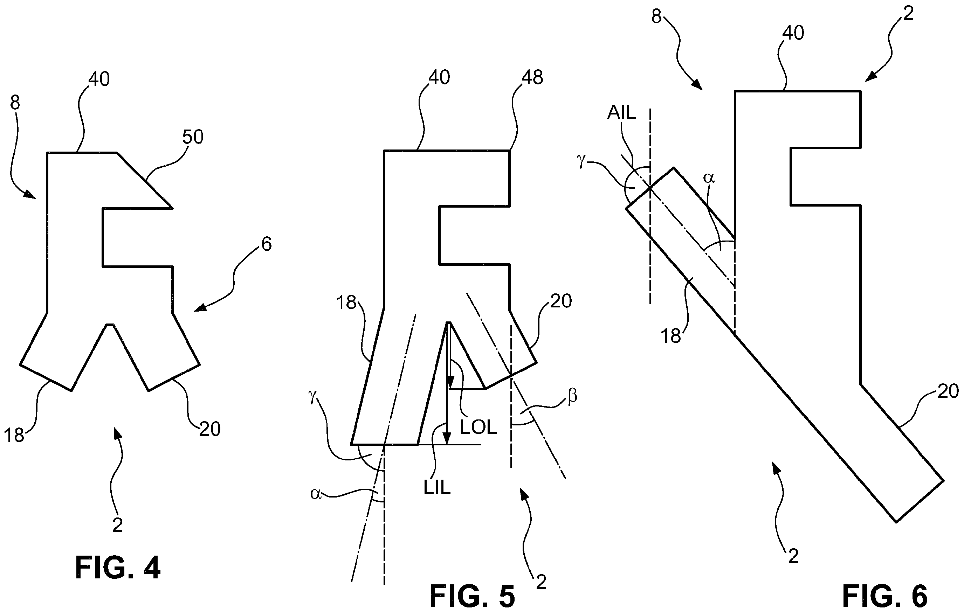

Figs. 4, 5 and 6 show cross-sections of further embodiments of a lip seal 2 (only one half of each cross-section is shown). Besides the bevel 50 formed on the outer end face edge 48 the embodiment shown in Fig. 4 is substantially similar to the first embodiment of the invention. The axial end face 40 of the fixing portion 8 is flat while the bevel 50 facilitates an engagement of the fixing portion 8 with the protrusion 202 of the first element. It is further preferred that a bevel is formed on the inner end face edge 46.

According to a third embodiment (Fig. 5) the axial length LIL of the inner leg 18 is larger than the axial length LOL of the outer leg 20. However, it is also preferred that the axial length LOL of the outer leg 20 is larger than the axial length LIL of the inner leg 18. Furthermore, according to the third embodiment the inner leg angle α is smaller than the outer leg angle β. The inner leg end face angle γ has a value of 90° and is therefore smaller than the outer leg end face angle δ of 120°.

In a fourth embodiment the inner leg 18 protrudes from the transition portion towards the central axis CA and the axial end face 40 of the fixing portion 8. The inner leg angle α is here measured counter clockwise. As in the first embodiment the inner leg end face angle γ is measured in an analogous manner to the inner leg angle α. It is further preferred that the outer leg 20 protrudes towards the axial end face 40.

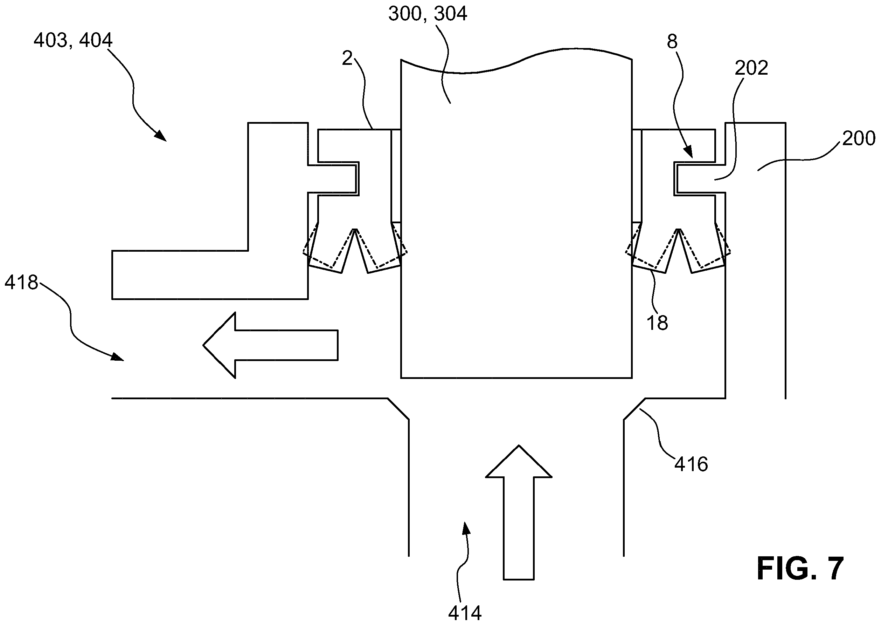

Fig. 7 depicts a valve 403, in particular trailer control valve 404, for a vehicle 400, which according to this embodiment is a commercial vehicle 402. The valve 403 comprises a first element 200, a second element 300, which is here formed as a piston 304, and a lip seal 2. As indicated by arrows in Fig. 7, the air enters via valve inlet 414. Piston 304 is movable in a vertical direction with respect to Fig. 7. In a closed position, piston 304 engages valve seat 416 and closes the valve. In the open position (as shown in Fig. 7) piston 304 is spaced from the valve seat 416 such that pressurized air can flow from the valve inlet 414 to the valve outlet 418. A lip seal 2 seals the first element 200 against the second element 300. The fixing portion 8 engages the protrusion 202 formed on the first element 200. To prevent leakage, the inner leg 18 engages the piston 302 while the outer leg 20 engages the first element 200. During operation the piston 304 slides relative to the inner leg 18, while the lip seal 2 is fixed to the first element 200.

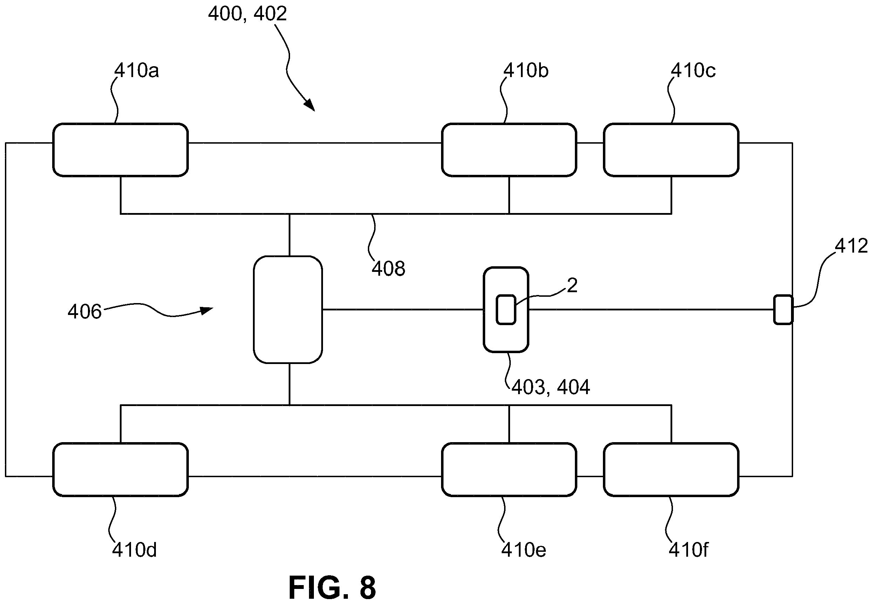

Fig. 8 depicts a schematic drawing of a vehicle 400. Vehicle 400 is preferably formed as a commercial vehicle 402 comprising a lip seal 2. Preferably, the lip seal 2 is part of a trailer control valve 404 of a pneumatic braking system 406 of the commercial vehicle 402. The braking system 41 is shown by lines 408 leading to wheels 41 0a, 41 0b, 410c, 410d, 410e, 410f for providing the wheels 410a, 410b, 410c, 410d, 410e, 410f with the respective braking pressure. The trailer control valve 404 further provides braking pressure to a trailer control port 412 for connecting a trailer (not shown). To prevent leakage and to keep the functioning of the trailer control valve 404 intact, said valve 404 comprises one or more lip seals 2.

### LIST OF REFERENCE SIGNS (PART OF DESCRIPTION)

- 2: Lip seal
- 4: Lip seal body
- 6: Sealing portion
- 8: Fixing portion
- 10: Assembly groove
- 12: Outer peripheral surface of the fixing portion
- 13: Outer peripheral surface of the fixing portion
- 14: Transition portion
- 16: Axial end portion
- 18: Inner leg
- 20: Outer leg
- 22: Inner leg end face
- 24: Outer leg end face
- 26: Leg transition
- 28: Inner leg axial end
- 29: Inner bend
- 30: Outer leg axial end
- 31: Outer bend
- 32: Groove bottom
- 34: First sidewall
- 36: Second sidewall
- 38: Opening side
- 40: Axial end face of the fixing portion
- 42: Circumferential inner edge
- 44: Circumferential outer edge
- 46: Inner end face edge
- 48: Outer end face edge
- 50: Bevel
- 200: First element
- 202: protrusion
- 204: Corresponding surface
- 206: Inner peripheral surface first element
- 300: Second element
- 302: Outer peripheral surface
- 304: piston
- 400: vehicle
- 402: Commercial vehicle
- 403: Valve
- 404: Trailer control valve
- 406: Braking system
- 408: Lines
- 410a, 410b, 410c, 410d, 410e, 410f: Wheels
- 412: Trailer control port
- 414: Valve inlet
- 416: Valve seat
- 418: Valve outlet
- AC: Central axis
- AIL: inner leg longitudinal axis
- AOL: Outer leg longitudinal axis
- D1: First outer diameter outer peripheral surface (at axial end portion)
- D2: Second outer diameter outer peripheral surface (at transition portion)
- D3: Minimum inner diameter (free position)
- D3E: Minimum inner diameter (engaged position)
- D4: Maximum outer diameter (free position)
- D4E: Maximum outer diameter (engaged position)
- D5: Inner diameter first element
- D6: Outer diameter second element
- LIL: Axial length inner leg (free position)
- LILE: Axial length inner leg (engaged position)
- LTP: Axial length transition portion
- LOL: Axial length outer leg (free position)
- LOLE: Axial length outer leg (engaged position)
- R1: First direction
- R2: Second direction
- R3: Radial direction
- WIL: Inner leg width
- WOL: Outer leg width
- α: Inner leg angle
- β: Outer leg angle
- γ: Inner leg end face angle
- δ: Outer leg end face angle

## Claims

1. A trailer control valve (404) for a vehicle (400), comprising at least one lip seal (2), a first element (200), a second element (300) formed as a piston (304), a valve inlet (414), a valve outlet (418), and a valve seat (416),
wherein, in a closed position, said piston (304) engages said valve seat (416) and closes said trailer control valve (404),
wherein, in an open position, said piston (304) is spaced from said valve seat (416) such that pressurized air can flow from said valve inlet (414) to said valve outlet (418),
wherein said lip seal (2) is for sealing said first element (200) against said second element (300) moving relative to the first element (200),
wherein said lip seal (2) comprises:
a ring shaped lip seal body (4), comprising
a sealing portion (6) for contacting said second element (300), and
a fixing portion (8) for fixing the lip seal (2) to said first element (200), having an assembly groove (10) formed in an outer peripheral surface (12) for engaging with a corresponding protrusion (202) formed on said first element (200) and
a transition portion (14) to the sealing portion (6),
the lip seal body (4) being rotationally symmetrical to a central axis (AC) of the lip seal body (4),
the sealing portion (6) comprising an inner leg (18) protruding towards the central axis (AC) and an outer leg (20) protruding away from the central axis (AC), wherein the outer leg (20) is adapted to sealingly contact the first element (200) and the inner leg (18) is adapted to sealingly contact the second element (300),
wherein, in order to prevent leakage, said inner leg (18) engages said piston (302) while said outer leg (20) engages said first element (200), and
wherein, during the operation of said trailer control valve (404), said piston (304) slides relative to said inner leg (18), while said lip seal (2) is fixed to said first element (200).

2. The trailer control valve (404) according to claim 1, wherein the outer leg (20) is adapted to be deformed towards the central axis (AC) upon assembly of the lip seal (2) with the first element (200).

3. The trailer control valve (404) according to claim 1 or 2, wherein the inner leg (18) is adapted to being deformed away from the central axis (AC) upon assembly of the lip seal (2) with the second element (300).

4. The trailer control valve (404) according to any of the preceding claims, wherein the outer leg (20) protrudes away from the central axis (AC) at an outer leg angle (β) having a range relative to the central axis (AC) of 90° to 10°, in particular 40° to 20°.

5. The trailer control valve (404) according to any of the preceding claims, wherein the inner leg (18) protrudes towards the central axis (CA) at an inner leg angle (α) having a range relative to the central axis (AC) of 90° to 10°, in particular 40° to 20°.

6. The trailer control valve (404) according to any of the preceding claims, wherein the inner leg (18) comprises a circumferential inner edge (42) adapted to form a sealing line contact with the second element (300).

7. The trailer control valve (404) according to any of the preceding claims, wherein the outer leg (20) comprises a circumferential outer edge (44) adapted to form a sealing line contact with the first element (200).

8. The trailer control valve (404) according to any of the preceding claims, wherein an axial length (LIL) of the inner leg (18), measured along the central axis (AC), is shorter than a corresponding axial length (LOL) of the outer leg (20).

9. The trailer control valve (404) according to any of the preceding claims wherein an inner leg width (WIL) of the inner leg (18) equals an outer leg width (WOL) of the outer leg (20).

10. The trailer control valve (404) according to any of the preceding claims, wherein the assembly groove (10) is U-shaped.

11. The trailer control valve (404) according to any of the preceding claims, wherein a first sidewall (34) and a second sidewall (34) of the assembly groove (10) are perpendicular to the central axis (AC).

12. The trailer control valve (404) according to any of the preceding claims, wherein the fixing portion (8) has an axial end face (40) perpendicular to the central axis (AC).

13. The trailer control valve (404) according to claim 11 and 12, wherein an assembly groove width (WAG) of the assembly groove (10) equals an axial end thickness (TAE) measured between the axial end face (40) and the first sidewall (34).

14. The trailer control valve (404) according to claim 11, wherein an assembly groove width (WAG) equals an axial length (LTP) of the transition portion (14).

15. The trailer control valve (404) according to any of the preceding claims, wherein the assembly groove (10) has a maximum depth (DAGM) measured in a radial direction (R3) in a range of 10% to 80%, in particular 40% to 60%, of the radial thickness (TFP) of the fixing portion (8).

16. The trailer control valve (404) according to any of the preceding claims, wherein the outer peripheral surface (12) of the fixing portion (8) is parallel to the central axis (AC).

17. The trailer control valve (404) according to any of the preceding claims, wherein the inner peripheral surface (13) of the fixing portion (8) is parallel to the central axis (AC).

18. The trailer control valve (404) according to any of the preceding claims, wherein the lip seal (2) is a one-piece construction/seal.

19. The trailer control valve (404) according to claim 6, wherein an inner leg end face (22) is angled towards the central axis (AC) at an inner leg end face angle (γ) having a range of larger than 90° to smaller than 180°, preferably 120°.

20. The trailer control valve (404) according to claim 7, wherein an outer leg end face (24) is angled away from the central axis (CA) at an outer leg end face angle (δ) having a range of larger than 90° to less than 180°, preferably 120°.

## Patentansprüche

1. Anhängersteuerventil (404) für ein Fahrzeug (400), umfassend mindestens eine Lippendichtung (2), ein erstes Element (200), ein zweites Element (300), das als ein Kolben (304) ausgebildet ist, einen Ventileinlass (414), einen Ventilauslass (418) und einen Ventilsitz (416),
wobei, in einer geschlossenen Position, der Kolben (304) mit dem Ventilsitz (416) in Eingriff steht und das Anhängersteuerventil (404) schließt,
wobei, in einer geöffneten Position, der Kolben (304) von dem Ventilsitz (416) derart beabstandet ist, dass Druckluft von dem Ventileinlass (414) zu dem Ventilauslass (418) strömen kann,
wobei die Lippendichtung (2) zum Abdichten des ersten Elements (200) gegenüber dem zweiten Element (300) dient, das sich relativ zu dem ersten Element (200) bewegt,
wobei die Lippendichtung (2) umfasst:
einen ringförmigen Lippendichtungskörper (4), umfassend
einen Dichtungsabschnitt (6) zum Berühren des zweiten Elements (300) und
einen Befestigungsabschnitt (8) zum Befestigen der Lippendichtung (2) an dem ersten Element (200), der eine Montagenut (10) aufweist, die in einer äußeren Umfangsoberfläche (12) ausgebildet ist, zum Ineingriffnehmen eines entsprechenden Vorsprungs (202), der an dem ersten Element (200) ausgebildet ist, und
einen Übergangsabschnitt (14) zu dem Dichtungsabschnitt (6),
wobei der Lippendichtungskörper (4) rotationssymmetrisch zu einer Mittelachse (AC) des Lippendichtungskörpers (4) ist,
der Dichtungsabschnitt (6) umfassend einen inneren Schenkel (18), der zu der Mittelachse (AC) vorsteht, und einen äußeren Schenkel (20), der von der Mittelachse (AC) weg vorsteht, wobei der äußere Schenkel (20) angepasst ist, um das erste Element (200) dichtend zu berühren, und der innere Schenkel (18) angepasst ist, um das zweite Element (300) dichtend zu berühren,
wobei, um Leckagen zu vermeiden, der innere Schenkel (18) mit dem Kolben (302) in Eingriff steht, während der äußere Schenkel (20) mit dem ersten Element (200) in Eingriff steht, und
wobei, während des Betriebs des Anhängersteuerventils (404), der Kolben (304) relativ zu dem inneren Schenkel (18) gleitet, während die Lippendichtung (2) an dem ersten Element (200) befestigt ist.

2. Anhängersteuerventil (404) nach Anspruch 1, wobei der äußere Schenkel (20) angepasst ist, um bei einem Zusammenbau der Lippendichtung (2) mit dem ersten Element (200) zu der Mittelachse (AC) verformt zu werden.

3. Anhängersteuerventil (404) nach Anspruch 1 oder 2, wobei der innere Schenkel (18) angepasst ist, um bei dem Zusammenbau der Lippendichtung (2) mit dem zweiten Element (300) von der Mittelachse (AC) weg verformt zu werden.

4. Anhängersteuerventil (404) nach einem der vorstehenden Ansprüche, wobei der äußere Schenkel (20) weg von der Mittelachse (AC) in einem äußeren Schenkelwinkel (β) vorsteht, der einen Bereich relativ zu der Mittelachse (AC) von 90° bis 10°, insbesondere 40° bis 20°, aufweist.

5. Anhängersteuerventil (404) nach einem der vorstehenden Ansprüche, wobei der innere Schenkel (18) zu der Mittelachse (CA) in einem inneren Schenkelwinkel (α) vorsteht, der einen Bereich relativ zu der Mittelachse (AC) von 90° bis 10°, insbesondere 40° bis 20° aufweist.

6. Anhängersteuerventil (404) nach einem der vorstehenden Ansprüche, wobei der innere Schenkel (18) eine umlaufende innere Kante (42) umfasst, die angepasst ist, um einen Dichtungslinienkontakt mit dem zweiten Element (300) auszubilden.

7. Anhängersteuerventil (404) nach einem der vorstehenden Ansprüche, wobei der äußere Schenkel (20) eine umlaufende äußere Kante (44) umfasst, die angepasst ist, um einen Dichtungslinienkontakt mit dem ersten Element (200) auszubilden.

8. Anhängersteuerventil (404) nach einem der vorstehenden Ansprüche, wobei eine axiale Länge (LIL) des inneren Schenkels (18), gemessen entlang der Mittelachse (AC), kürzer als eine entsprechende axiale Länge (LOL) des äußeren Schenkels (20) ist.

9. Anhängersteuerventil (404) nach einem der vorstehenden Ansprüche, wobei eine innere Schenkelbreite (WIL) des inneren Schenkels (18) gleich einer äußeren Schenkelbreite (WOL) des äußeren Schenkels (20) ist.

10. Anhängersteuerventil (404) nach einem der vorstehenden Ansprüche, wobei die Montagenut (10) U-förmig ist.

11. Anhängersteuerventil (404) nach einem der vorstehenden Ansprüche, wobei eine erste Seitenwand (34) und eine zweite Seitenwand (34) der Montagenut (10) senkrecht zu der Mittelachse (AC) sind.

12. Anhängersteuerventil (404) nach einem der vorstehenden Ansprüche, wobei der Befestigungsabschnitt (8) eine axiale Endfläche (40) aufweist, die senkrecht zu der Mittelachse (AC) ist.

13. Anhängersteuerventil (404) nach Anspruch 11 und 12, wobei eine Montagenutbreite (WAG) der Montagenut (10) gleich einer axialen Enddicke (TAE) ist, gemessen zwischen der axialen Endfläche (40) und der ersten Seitenwand (34).

14. Anhängersteuerventil (404) nach Anspruch 11, wobei eine Montagenutbreite (WAG) gleich einer axialen Länge (LTP) des Übergangsabschnitts (14) ist.

15. Anhängersteuerventil (404) nach einem der vorstehenden Ansprüche, wobei die Montagenut (10) eine maximale Tiefe (DAGM), gemessen in einer radialen Richtung (R3) in einem Bereich von 10 % bis 80 %, insbesondere 40 % bis 60 %, der radialen Dicke (TFP) des Befestigungsabschnitts (8) aufweist.

16. Anhängersteuerventil (404) nach einem der vorstehenden Ansprüche, wobei die äußere Umfangsoberfläche (12) des Befestigungsabschnitts (8) parallel zu der Mittelachse (AC) ist.

17. Anhängersteuerventil (404) nach einem der vorstehenden Ansprüche, wobei die innere Umfangsoberfläche (13) des Befestigungsabschnitts (8) parallel zu der Mittelachse (AC) ist.

18. Anhängersteuerventil (404) nach einem der vorstehenden Ansprüche, wobei die Lippendichtung (2) eine einteilige Konstruktion/Dichtung ist.

19. Anhängersteuerventil (404) nach Anspruch 6, wobei eine innere Schenkelendfläche (22) zu der Mittelachse (AC) in einem inneren Schenkelendflächenwinkel (γ) abgewinkelt ist, der einen Bereich von größer als 90° bis kleiner als 180°, vorzugsweise 120°, aufweist.

20. Anhängersteuerventil (404) nach Anspruch 7, wobei eine äußere Schenkelendfläche (24) von der Mittelachse (CA) weg in einem äußeren Schenkelendflächenwinkel (δ) abgewinkelt ist, der einen Bereich von größer als 90° bis kleiner als 180°, vorzugsweise 120°, aufweist.

## Revendications

1. Soupape de commande de remorque (404) pour un véhicule (400), comprenant au moins un joint à lèvre (2), un premier élément (200), un second élément (300) formé comme un piston (304), une entrée de soupape (414), une sortie de soupape (418), et un siège de soupape (416),
dans laquelle, en position fermée, ledit piston (304) se met en prise avec ledit siège de soupape (416) et ferme ladite soupape de commande de remorque (404),
dans laquelle, en position ouverte, ledit piston (304) est éloigné dudit siège de soupape (416) de sorte que l'air sous pression peut s'écouler de ladite entrée de soupape (414) vers ladite sortie de soupape (418),
dans laquelle ledit joint à lèvre (2) sert à sceller ledit premier élément (200) contre ledit second élément (300) qui se déplace par rapport au premier élément (200),
dans laquelle ledit joint à lèvres (2) comprend :
un corps de joint à lèvre en forme d'anneau (4), comprenant
une partie d'étanchéité (6) destinée à entrer en contact avec ledit deuxième élément (300), et
une partie de fixation (8) pour fixer le joint à lèvre (2) audit premier élément (200), présentant une rainure d'assemblage (10) formée dans une surface périphérique externe (12) pour se mettre en prise avec une saillie correspondante (202) formée sur ledit premier élément (200) et
une partie de transition (14) vers la partie d'étanchéité (6),
le corps de joint à lèvre (4) étant symétrique en rotation par rapport à un axe central (AC) du corps de joint à lèvre (4),
la partie d'étanchéité (6) comprenant une jambe interne (18) faisant saillie vers l'axe central (AC) et une jambe externe (20) faisant saillie à l'écart de l'axe central (AC), dans laquelle la jambe externe (20) est adaptée pour entrer en contact de manière étanche avec le premier élément (200) et la jambe interne (18) est adaptée pour entrer en contact de manière étanche avec le second élément (300),
dans laquelle, de manière à empêcher des fuites, ladite jambe interne (18) se met en prise avec ledit piston (302) tandis que ladite jambe externe (20) se met en prise avec ledit premier élément (200), et
dans laquelle, pendant le fonctionnement de ladite soupape de commande de remorque (404), ledit piston (304) glisse par rapport à ladite jambe interne (18), tandis que ledit joint à lèvre (2) est fixé audit premier élément (200).

2. Soupape de commande de remorque (404) selon la revendication 1, dans laquelle la jambe externe (20) est adaptée pour être déformée vers l'axe central (AC) lors de l'assemblage du joint à lèvre (2) avec le premier élément (200).

3. Soupape de commande de remorque (404) selon la revendication 1 ou 2, dans laquelle la jambe interne (18) est adaptée pour être déformée à l'écart de l'axe central (AC) lors de l'assemblage du joint à lèvre (2) avec le second élément (300).

4. Soupape de commande de remorque (404) selon l'une quelconque des revendications précédentes, dans laquelle la jambe externe (20) fait saillie à l'écart de l'axe central (AC) à un angle de jambe externe (β) ayant une plage par rapport à l'axe central (AC) de 90° à 10°, en particulier de 40° à 20°.

5. Soupape de commande de remorque (404) selon l'une quelconque des revendications précédentes, dans laquelle la jambe interne (18) fait saillie vers l'axe central (CA) à un angle de jambe interne (α) ayant une plage par rapport à l'axe central (AC) de 90° à 10°, en particulier de 40° à 20°.

6. Soupape de commande de remorque (404) selon l'une quelconque des revendications précédentes, dans laquelle la jambe interne (18) comprend un bord interne circonférentiel (42) adapté pour former un contact de ligne d'étanchéité avec le second élément (300).

7. Soupape de commande de remorque (404) selon l'une quelconque des revendications précédentes, dans laquelle la jambe externe (20) comprend un bord externe circonférentiel (44) adapté pour former un contact de ligne d'étanchéité avec le premier élément (200).

8. Soupape de commande de remorque (404) selon l'une quelconque des revendications précédentes, dans laquelle une longueur axiale (LIL) de la jambe interne (18), mesurée le long de l'axe central (AC), est plus courte qu'une longueur axiale correspondante (LOL) de la jambe externe (20).

9. Soupape de commande de remorque (404) selon l'une quelconque des revendications précédentes, dans laquelle une largeur de jambe interne (WIL) de la jambe interne (18) est égale à une largeur de jambe externe (WOL) de la jambe externe (20).

10. Soupape de commande de remorque (404) selon l'une quelconque des revendications précédentes, dans laquelle la rainure d'assemblage (10) est en forme de U.

11. Soupape de commande de remorque (404) selon l'une quelconque des revendications précédentes, dans laquelle une première paroi latérale (34) et une seconde paroi latérale (34) de la rainure d'assemblage (10) sont perpendiculaires à l'axe central (AC).

12. Soupape de commande de remorque (404) selon l'une quelconque des revendications précédentes, dans laquelle la partie de fixation (8) présente une face d'extrémité axiale (40) perpendiculaire à l'axe central (AC).

13. Soupape de commande de remorque (404) selon les revendications 11 et 12, dans laquelle une largeur de rainure d'assemblage (WAG) de la rainure d'assemblage (10) est égale à une épaisseur d'extrémité axiale (TAE) mesurée entre la face d'extrémité axiale (40) et la première paroi latérale (34).

14. Soupape de commande de remorque (404) selon la revendication 11, dans laquelle une largeur de rainure d'assemblage (WAG) est égale à une longueur axiale (LTP) de la partie de transition (14).

15. Soupape de commande de remorque (404) selon l'une quelconque des revendications précédentes, dans laquelle la rainure d'assemblage (10) a une profondeur maximale (DAGM) mesurée dans une direction radiale (R3) dans une plage de 10 % à 80 %, en particulier de 40 % à 60 %, de l'épaisseur radiale (TFP) de la partie de fixation (8).

16. Soupape de commande de remorque (404) selon l'une quelconque des revendications précédentes, dans laquelle la surface périphérique externe (12) de la partie de fixation (8) est parallèle à l'axe central (AC).

17. Soupape de commande de remorque (404) selon l'une quelconque des revendications précédentes, dans laquelle la surface périphérique interne (13) de la partie de fixation (8) est parallèle à l'axe central (AC).

18. Soupape de commande de remorque (404) selon l'une quelconque des revendications précédentes, dans laquelle le joint à lèvre (2) est une construction/un joint d'une seule pièce.

19. Soupape de commande de remorque (404) selon la revendication 6, dans laquelle une face d'extrémité de jambe interne (22) est inclinée vers l'axe central (AC) à un angle de face d'extrémité de jambe interne (γ) ayant une plage de plus de 90° à moins de 180°, de préférence 120°.

20. Soupape de commande de remorque (404) selon la revendication 7, dans laquelle une face d'extrémité de jambe externe (24) est inclinée à l'écart de l'axe central (CA) à un angle de face d'extrémité de jambe externe (δ) ayant une plage de plus de 90° à moins de 180°, de préférence 120°.
